# FASCICULE DE BREVET EUROPEEN

(11) **EP 3 645 399 B1**
(45) Date de publication et mention de la délivrance du brevet: **26.01.2022**
(21) Numéro de dépôt: 18748997.6
(22) Date de dépôt: 25.06.2018
(51) Int. Cl.: B64F 5/50

(54) **ENSEMBLE DE MANUTENTION D'UN TURBORÉACTEUR D'AÉRONEF**
WARTUNGSVORRICHTUNG FÜR EIN FLUGZEUGTURBINENTRIEBWERK
MAINTENANCE ASSEMBLY FOR AN AIRCRAFT TURBINE ENGINE

(30) Priorité: 29.06.2017 FR 1756067
(43) Date de publication de la demande: 06.05.2020
(73) Titulaire: Safran Nacelles, 76700 Gonfreville-l'Orcher (FR)
(72) Inventeur: CHANTAL, Patrice, 76700 Gonfreville L'Orcher (FR); DRIEU, Thierry, 76700 Gonfreville L'Orcher (FR)
(74) Mandataire: Germain Maureau
(86) Numéro de dépôt international: PCT/FR2018/051540
(87) Numéro de publication internationale: WO 2019/002740

(56) Documents cités:
- FR-A1- 2 449 057
- FR-A1- 3 021 954
- US-A- 2 920 773
- US-A- 2 921 784
- US-A- 2 940 769
- US-A1- 2012 110 816
- US-B1- 6 485 247

## Description

La présente invention concerne un ensemble de manutention d'un moteur d'aéronef, tel qu'un turboréacteur.

Un aéronef est mû par un ou plusieurs turboréacteurs logés chacun dans une nacelle.

Une nacelle présente généralement une structure sensiblement tubulaire comprenant une entrée d'air en amont du turboréacteur, un ensemble intermédiaire destiné à entourer une soufflante du turboréacteur et une ensemble arrière pouvant intégrer des moyens d'inversion de poussée et destiné à entourer la chambre de combustion et tout ou partie des étages de compresseur et de turbine du turboréacteur, et est généralement terminée par une tuyère d'éjection dont la sortie est située en aval du turboréacteur.

Le montage d'un turboréacteur sur un avion suit en général les étapes suivantes :
- le turboréacteur nu est livré par le motoriste au fabricant de nacelles qui assemble le moteur et sa nacelle ;
- le moteur équipé de sa nacelle est livré à l'avionneur qui effectue le montage du moteur sous aile.

A chaque étape de ce processus, la manutention du moteur est une opération critique car les turboréacteurs sont des pièces très lourdes et de dimensions très importantes, mais fragiles. Les moteurs sont ainsi fixés à des chariots de transport assurant le maintien du moteur de façon à empêcher toute déformation dommageable de celui-ci.

Pour les mêmes raisons, l'accrochage du moteur sous aile s'effectue en général au moyen d'un dispositif de levage permettant de soulever le moteur par l'intermédiaire de, ou avec, son chariot de transport. Le chariot de transport est alors retiré une fois que le moteur est fixé à l'aile. Un tel dispositif est connu notamment du document US 6 485 247 B1.

D'une manière générale, les précautions nécessaires à la manutention d'un turboréacteur sont consommatrices de temps et génératrices de risques. Par exemple, lorsque le moteur nu est livré au fabricant de nacelles, il est nécessaire de désolidariser le moteur de son chariot de transport pour le suspendre en hauteur. En effet, il n'est pas possible de procéder à l'assemblage de la nacelle si le moteur est fixé à son chariot de transport car ce dernier empêche l'accès à certaines parties du moteur. Une fois la nacelle assemblée au moteur, celui-ci doit être à nouveau solidarisé d'un chariot de transport pour être déplacé jusqu'au site d'assemblage de l'avionneur.

L'invention objet du brevet FR 3 021 954 B1 résout ces inconvénients et fournit un ensemble de manutention qui permet d'assurer à la fois les opérations de transport du moteur, d'assemblage de la nacelle et d'accrochage du moteur sous aile.

Un tel ensemble de manutention comporte :
- un châssis ;
- quatre actionneurs, solidaires du châssis et disposés deux à deux en regard, de part et d'autre d'un axe longitudinal du châssis ;
- deux bras de liaison, allongés selon une direction transversale du châssis, et reliant chacun deux des actionneurs, chaque bras de liaison comportant deux dispositifs de fixation du turboréacteur.

En prévoyant quatre actionneurs reliés deux à deux par des bras de liaisons transversaux, le moteur peut être fixé directement à l'ensemble de manutention, sans nécessiter de berceau ou de chariot de transport. L'ensemble de manutention permet ainsi de lever un moteur pour l'arrimer à l'aile d'un avion avec le maintien et la rigidité nécessaires. En outre, l'ensemble de manutention permet de réaliser toutes les opérations d'assemblage de la nacelle sur le moteur, du fait de l'absence d'éléments empêchant l'accès au moteur. Enfin, le transport peut être assuré en laissant le moteur solidaire de l'engin de manutention, si bien que celui-ci peut-être utilisé pour toutes les étapes du processus de montage du moteur, depuis la livraison du moteur nu par le motoriste jusqu'à l'accrochage sous aile. Ces étapes sont mises en œuvre en laissant le moteur solidaire de l'ensemble de manutention objet de l'invention.

Toutefois, les inconvénients suivants résultent de l'ensemble de manutention qui vient d'être décrit :
- des fuites hydrauliques se produisent lorsque l'opérateur branche et débranche la centrale hydraulique sur le châssis. Ces fuites sont dangereuses pour les opérateurs ;
- le châssis a tendance à dériver en raison des défauts de planéité du sol lorsque l'ensemble de manutention est monté sur coussins d'air. Le maintien en position immobile du châssis nécessite la présence de plusieurs opérateurs, accentuant les risques humains et matériels ;
- la présence de quatre actionneurs affecte l'accessibilité pour les opérateurs de certaines zones du moteur;
- aucun retour d'information sur la force appliquée sur les attaches moteur, entraînant un risque de casse mécanique.

En outre, la rotation du moteur monté sur l'ensemble de manutention peut être effectuée :
- en allongeant d'une même course les deux actionneurs avant ou les deux actionneurs arrière, de façon à entraîner une rotation du moteur autour d'un axe sensiblement transverse au châssis de l'ensemble de manutention et passant par les extrémités des deux actionneurs avant ou arrière, ou
- en allongeant d'une même course les deux actionneurs positionnés le long d'un même bord du châssis de l'ensemble de manutention, de façon à entraîner une rotation du moteur autour d'un axe sensiblement parallèle à un axe longitudinal du châssis de l'ensemble de manutention et passant par les extrémités des deux actionneurs d'un même bord.

Lorsqu'une rotation du moteur est effectuée autour d'un axe sensiblement parallèle à un axe longitudinal du châssis de l'ensemble de manutention et passant par les extrémités des deux actionneurs d'un même bord, l'axe de rotation du moteur est excentré par rapport à l'axe longitudinal du moteur. Cette rotation excentrée entraîne une mauvaise accessibilité au moteur pour l'opérateur ou les opérateurs.

L'objet de la présente invention vise à résoudre les inconvénients de l'art antérieur précités, et se rapporte à cet effet à un ensemble de manutention d'un turboréacteur d'aéronef, comprenant :
- un châssis;
- un berceau avant positionné vers l'avant dudit ensemble de manutention et un berceau arrière positionné vers l'arrière dudit ensemble de manutention, conçus pour supporter le turboréacteur à maintenir, chacun desdits berceaux comportant deux dispositifs de fixation du turboréacteur ;
- une pluralité d'actionneurs électriques,
   ledit ensemble de manutention étant remarquable en ce que la pluralité d'actionneurs électriques comporte :
- deux actionneurs électriques, disposés de part et d'autre d'un axe longitudinal du châssis, l'un desdits deux actionneurs étant relié au berceau avant et agencé pour déplacer uniquement ledit berceau avant uniquement en translation verticale, l'autre desdits deux actionneurs étant relié au berceau arrière et agencé pour déplacer uniquement ledit berceau arrière uniquement en translation verticale, ou
- trois actionneurs électriques, dont un premier actionneur et un deuxième actionneur sont disposés en regard l'un de l'autre, de part et d'autre d'un axe longitudinal du châssis, reliés au berceau avant et agencés pour déplacer ledit berceau avant en translation verticale, et dont un troisième actionneur est relié au berceau arrière et agencé pour déplacer ledit berceau arrière en translation verticale ; ledit ensemble de manutention étant en outre remarquable en ce qu'il comporte un dispositif d'entraînement en rotation du berceau avant autour d'un axe longitudinal dudit ensemble de manutention.

Ainsi, en prévoyant un ensemble de manutention comportant uniquement deux ou uniquement trois actionneurs, l'accessibilité au turboréacteur est améliorée. Le dispositif d'entraînement en rotation du berceau avant autour de l'axe de rotation du moteur rend possible l'entraînement en rotation du moteur autour de son axe longitudinal contrairement aux ensembles de manutention de l'art antérieur où la rotation du turboréacteur est excentrée par rapport à son axe longitudinal. L'accessibilité au turboréacteur s'en trouve ainsi améliorée par rapport à l'art antérieur.

Selon des caractéristiques optionnelles de l'ensemble de manutention de l'invention :
- chacun desdists berceaux avant et arrière comporte :
   - un bras de fixation du turboréacteur, allongé selon une direction transversale du châssis, sensiblement hémicirculaire, supportant les dispositifs de fixation du turboréacteur, et
   - un bras de liaison, conçu pour relier le bras de fixation à ou aux actionneur(s) électrique(s), et le dispositif d'entraînement en rotation comporte :
   - une roue crantée, s'étendant le long du bras de fixation du berceau avant,
   - un pignon, en prise avec ladite roue crantée, supporté par le bras de liaison, et
   - un moyen d'entraînement en rotation du pignon ;
- le berceau arrière comporte un dispositif de guidage en rotation dudit berceau arrière autour de l'axe longitudinal de l'ensemble de manutention ;
- chacun desdits actionneurs électriques est constitué par un système vis-écrou conçu pour entraîner lesdits berceaux avant et arrière en translation verticale ;
- le système vis-écrou comporte :
   - une vis, montée sur le châssis de l'ensemble de manutention,
   - un écrou, en prise avec ladite vis et solidaire du bras de liaison du berceau,
   - un moyen d'entraînement en rotation de ladite vis ;
- le châssis est équipé de dispositifs permettant son déplacement, tels que des roues et des coussins d'air;
- l'ensemble de manutention comporte au moins un dispositif de stabilisation du châssis de l'ensemble de manutention au sol ;
- le dispositif de stabilisation comporte :
   - une béquille en matériau élastomère, et
   - un moyen d'actionnement de ladite béquille, entre une position rétractée autorisant le déplacement de l'ensemble de manutention relativement au sol, et une position déployée selon laquelle ladite béquille vient en butée contre le sol ;
- le dispositif de stabilisation comporte en outre un moyen d'ajustement du châssis de l'ensemble de manutention sur le sol, conçu pour autoriser de légers déplacements en translation dudit châssis sur le sol selon au moins deux directions de déplacement ;
- le moyen d'ajustement du châssis de l'ensemble de manutention sur le sol comporte un ensemble de billes agencées dans la béquille ;
- l'ensemble de manutention comporte un dispositif de mesure de l'effort de plaquage du turboréacteur au mât sur lequel ledit turboréacteur est destiné à être monté ;
- l'ensemble de manutention comporte en outre un moyen d'affichage de l'effort de plaquage.

D'autres caractéristiques et avantages de l'invention apparaîtront à la lecture de la description détaillée qui suit pour la compréhension de laquelle on se reportera aux dessins annexés dans lesquels :
- la figure 1 est une vue isométrique avant de l'ensemble de manutention selon l'invention ;
- la figure 2 illustre l'ensemble de manutention de l'invention en vue isométrique arrière, supportant un turboréacteur en position basse ;
- la figure 3 est une vue identique à celle de la figure 3, l'ensemble de manutention étant en position haute ;
- la figure 4 est une vue centrée sur le dispositif d'entraînement en rotation du berceau avant ;
- la figure 5 est une vue arrière de l'ensemble de manutention de l'invention supportant un turboréacteur, en position haute ;
- la figure 6 est une vue arrière de l'ensemble de manutention de l'invention supportant un turboréacteur, en position haute, dans une position de rotation du turboréacteur autour de son axe longitudinal ;
- la figure 7 est une vue isométrique de dessous de l'ensemble de manutention ;
- la figure 8 illustre en vue isométrique de dessous une réalisation du dispositif de stabilisation est une vue de détail d'un dispositif de stabilisation du châssis de l'ensemble de manutention au sol.

Sur l'ensemble des figures, des références identiques ou analogues représentent des organes ou ensembles d'organes identiques ou analogues.

Par ailleurs, dans la description et les revendications, pour clarifier la description et les revendications, on adoptera à titre non limitatif la terminologie longitudinal, vertical et transversal en référence au trièdre direct L, V, T indiqué aux figures, dont l'axe longitudinal L est parallèle à l'axe longitudinal de l'ensemble de manutention.

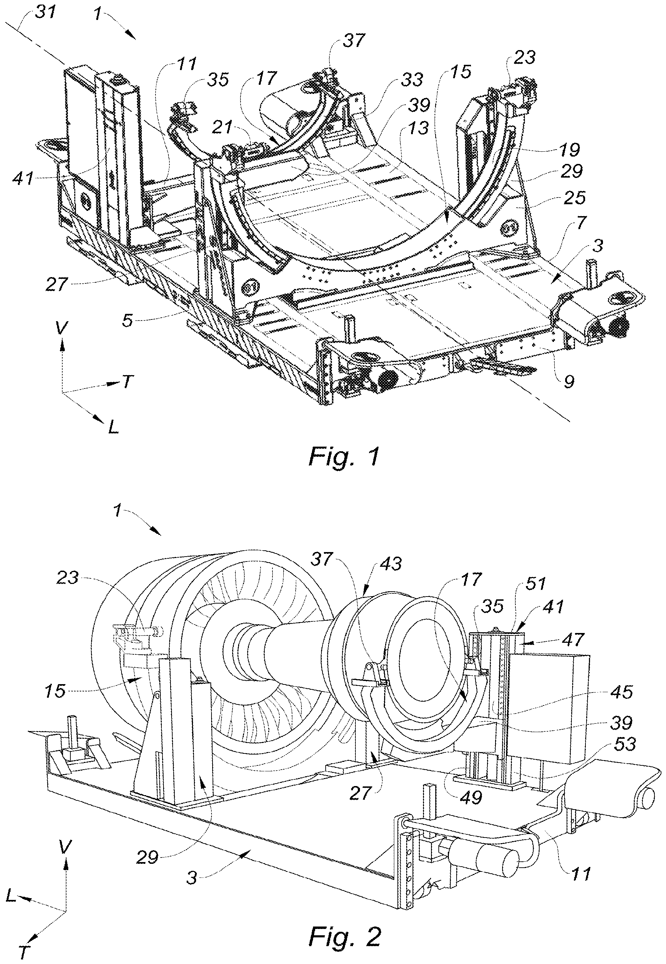

On se réfère à la figure 1 représentant l'ensemble de manutention 1 de l'invention.

L'ensemble de manutention 1 comporte un châssis 3, dans l'exemple de forme générale rectangulaire, allongée selon une direction longitudinale parallèle à l'axe L.

Le châssis 3 comporte dans l'exemple un cadre formé de quatre longerons : deux longerons latéraux 5, 7, un longeron avant 9 et un longeron arrière 11 (mieux visible à la figure 2). Dans l'espace délimité par ces logerons est réalisé un plancher 13.

L'ensemble de manutention 1 comporte un berceau avant 15 et un berceau arrière 17, le berceau avant étant positionné vers l'avant de l'ensemble de manutention et le berceau arrière étant positionné vers l'arrière de l'ensemble de manutention.

Le berceau avant 15 comporte un bras de fixation 19 du turboréacteur, de forme sensiblement hémicirculaire, s'étendant sensiblement selon l'axe T transverse à l'axe L du châssis 3.

Le bras de fixation 19 supporte deux dispositifs 21, 23 de fixation du turboréacteur, sur lesquels vient se fixer le carter de soufflante du turboréacteur (visible à la figure 2).

Le berceau avant 15 comporte en outre un bras de liaison 25, conçu pour relier le bras de fixation 19 du berceau avant à deux actionneurs électriques 27, 29, disposés de part et d'autre d'un axe longitudinal 31 du châssis 3.

L'actionneur électrique 27 est positionné à proximité de la droite et de l'avant de l'ensemble de manutention 1, tandis que l'actionneur électrique 29 est positionné à proximité de la gauche et de l'avant de l'ensemble de manutention 1.

Le berceau arrière 17 comporte également un bras de fixation 33 du turboréacteur, de forme sensiblement hémicirculaire, s'étendant sensiblement selon l'axe T transverse à l'axe L du châssis 3.

Le bras de fixation 33 supporte deux dispositifs 35, 37 de fixation du turboréacteur, sur lesquels vient se fixer une partie aval du turboréacteur, la turbine basse pression par exemple (visible à la figure 2).

Le berceau arrière 17 comporte en outre un bras de liaison 39, conçu pour relier le bras de fixation 33 du berceau arrière à un actionneur électrique 41 unique, disposé vers l'arrière du châssis 3. L'actionneur électrique 41 est positionné à proximité de la droite et de l'arrière de l'ensemble de manutention 1.

Selon l'invention, l'actionneur électrique 27 (avant droit) et l'actionneur électrique 29 (avant gauche) sont disposés en regard l'un de l'autre, de part et d'autre de l'axe longitudinal 31 du châssis 3 de l'ensemble 1.

L'actionneur électrique 41 est positionné à proximité de la droite et de l'arrière de l'ensemble de manutention 1. A noter que selon une réalisation non représentée, l'actionneur électrique 41 peut être positionné à proximité de la gauche et de l'arrière de l'ensemble de manutention.

Selon une autre réalisation non représentée, l'ensemble de manutention 1 comporte uniquement deux actionneurs électriques qui sont disposés de part et d'autre de l'axe longitudinal 31 du châssis 3. Le premier actionneur électrique est relié au berceau avant et le deuxième actionneur électrique est relié au berceau arrière.

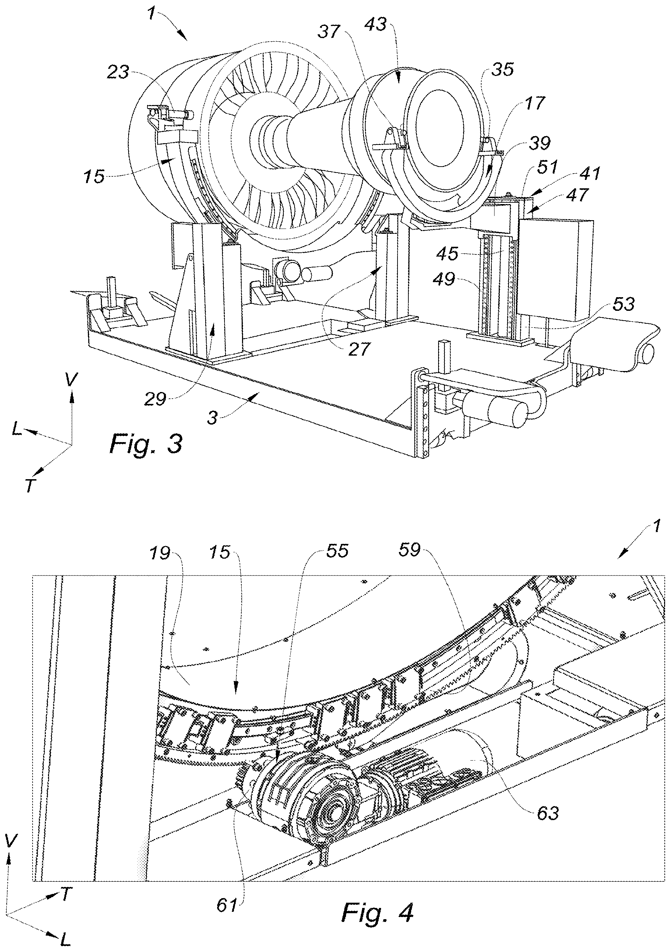

On se réfère aux figures 2 et 3 sur lesquelles est représenté l'ensemble de manutention en vue isométrique arrière, supportant un turboréacteur 43, respectivement en position basse (figure 2) et en position haute (figure 3).

Le passage entre les positions basse et haute est obtenu en activant chaque actionneur électrique 27, 29, 41.

Quel que soit le nombre (deux ou trois) d'actionneurs électriques retenu pour équiper l'ensemble de manutention, chaque actionneur est agencé pour déplacer le berceau auquel il est relié en translation verticale.

Les actionneurs électriques 27, 29 sont ainsi agencés pour déplacer uniquement le berceau avant 15 uniquement selon en direction verticale, tandis que l'actionneur électrique 41 est agencé pour déplacer uniquement le berceau arrière 17 uniquement selon en direction verticale.

A cet effet, chaque actionneur électrique est obtenu par un système vis-écrou. On a représenté aux figures 2 et 3 le système vis-écrou constituant l'actionneur électrique 41 arrière droit.

Un tel système vis-écrou comporte, de façon connue de l'homme du métier, une vis 45, montée sur le châssis 3 de l'ensemble de manutention et un écrou (non représenté), venant en prise avec la vis 45 et solidaire du bras de liaison 39 du berceau arrière 17. La vis est entraînée en rotation autour de son axe longitudinal par un moyen d'entraînement en rotation tel qu'un moteur électrique. La vis 45 est protégée par un carter 47 comprenant trois tôles 49, 51, 53 agencées de façon à permettre à l'écrou du bras de liaison 39 de venir en prise avec la vis 45. La rotation de la vis 45 entraîne la translation de l'écrou solidaire du bras de liaison, le long de la vis 45, permettant le passage entre une position basse (respectivement haute) et une position haute (respectivement basse). Le système vis-écrou peut comporter un frein, en cas de rupture de la ligne électrique.

Les systèmes vis-écrou constituant les actionneurs électriques avant droit 27 et avant gauche 29 sont de conception identique à celle de l'actionneur électrique 41 arrière droit.

Comme représenté aux figures 2 et 3, les actionneurs électriques avant 27, 29 et l'actionneur électrique arrière 41 sont synchronisés de façon à entraîner un déplacement du turboréacteur 43 à l'horizontale, le long de l'axe vertical V. Le fait d'utiliser un ensemble d'actionneurs électriques plutôt que des actionneurs pneumatiques ou hydrauliques permet une meilleure synchronisation de déplacement des berceaux avant et arrière.

Selon une disposition de l'invention, l'ensemble de manutention comporte un dispositif de mesure de l'effort de plaquage du turboréacteur au mât sur lequel le turboréacteur est destiné à être monté. Ce dispositif permet de mesurer la force appliquée sur chacun des actionneurs électriques, et peut par exemple consister en une rondelle de force que l'on place à la base des actionneurs afin d'identifier le transfert de charge. La mesure de l'effort de plaquage peut avantageusement être affiché en temps réel sur un moyen d'affichage équipant l'ensemble de manutention de l'invention, ceci afin qu'un opérateur puisse en temps réel adapter l'effort qu'il applique pour plaquer le turboréacteur au mât.

Selon une disposition non représentée sur les figures, les actionneurs électriques avant 27, 29 et l'actionneur électrique arrière 41 peuvent être désynchronisés, de façon à entraîner un déplacement de l'un des berceaux, avant ou arrière, d'une course différente de l'autre des berceaux avant ou arrière.

Une telle désynchronisation entraîne une rotation du turboréacteur 43 autour d'un axe parallèle à l'axe transversal T et passant par les dispositifs 21, 23 (seul le dispositif de fixation 23 est visible aux figures 2 et 3) de fixation du turboréacteur au berceau avant 15, ou une rotation du turboréacteur autour d'un axe parallèle à l'axe transversal T et passant par les dispositifs 35, 37 de fixation du turboréacteur au berceau arrière 17. Cette disposition permet de faire cabrer le turboréacteur, ceci étant utile en raison de l'angle d'accroche du turboréacteur sur le mât, sensiblement égal à -2,2°. Il est typiquement envisagé de pouvoir atteindre un angle de tangage du turboréacteur compris entre environ +/-7° et +/-10° par rapport à un axe parallèle à l'axe transversal T.

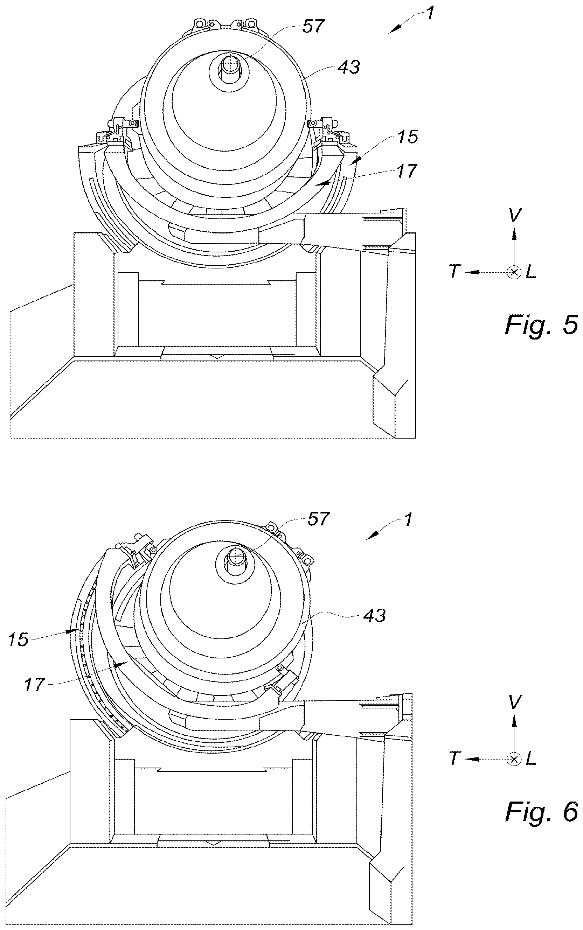

On se réfère à présent aux figures 4 à 6. Selon l'invention, l'ensemble de manutention 1 est équipé d'un dispositif d'entraînement en rotation 55 du berceau avant 15 autour d'un axe longitudinal 57 (visible aux figure 5 et 6) de l'ensemble de manutention. L'axe longitudinal 57 correspond à un axe sensiblement parallèle à l'axe L du trièdre et passant par le centre du cercle virtuel défini par le berceau avant 15. L'axe longitudinal 57 est en d'autres termes confondu avec l'axe longitudinal du turboréacteur 43 lorsque ce dernier est monté sur l'ensemble de manutention 1 et supporté par l'ensemble de manutention en position horizontale, comme visible aux figures 5 et 6.

En référence à la figure 4, représentant une vue de l'ensemble de manutention 1 centrée sur le dispositif d'entraînement en rotation 55 du berceau avant 15, ce dispositif d'entraînement en rotation 55 comporte une roue crantée 59 qui s'étend le long du bras de fixation 19 du berceau avant 15. La roue crantée 59 vient en prise avec un pignon 61 supporté le bras de liaison 25 du berceau avant 15. La rotation du pignon 61 est commandée par un moyen d'entraînement en rotation tel qu'un moteur électrique 63, pouvant être supporté par le bras de liaison 25 (non représenté pour une meilleure visibilité) du berceau avant 15.

On se réfère à la figure 5 sur laquelle est représenté en vue arrière l'ensemble de manutention 1 supportant le turboréacteur 43 en position haute, le berceau avant 15 n'ayant pas encore été entraîné en rotation autour de l'axe longitudinal 57 du turboréacteur.

Lorsque le pignon 61 est entraîné en rotation par le moteur électrique, les dents du pignon entraînent la roue crantée 59 solidaire du bras de fixation 19 du berceau avant 15 en rotation. Le turboréacteur, fixé sur le berceau avant 15 par l'intermédiaire des dispositifs de fixation 21, 23, est de concert entraîné en rotation autour de son axe longitudinal 57, par exemple pour atteindre la position représentée à la figure 6 illustrant en vue arrière l'ensemble de manutention 1 supportant le turboréacteur 43 en position haute, le berceau avant 15 ayant été entraîné en rotation autour de l'axe longitudinal 57 du turboréacteur.

Le berceau arrière 17 comporte quant à lui un dispositif suiveur de mouvement. Ce dispositif consiste typiquement en un dispositif de guidage en rotation du berceau arrière 17 autour de l'axe longitudinal 57 de l'ensemble de manutention, tel qu'un guide sur roulements à billes.

En variante, l'ensemble de manutention peut être équipé d'un dispositif d'entraînement en rotation du berceau arrière, conforme à celui qui vient d'être décrit pour le berceau avant, en complément du dispositif d'entraînement en rotation du berceau avant.

En variante, seul le berceau arrière peut être équipé d'un dispositif d'entraînement en rotation du berceau arrière, conforme à celui qui vient d'être décrit pour le berceau avant, et le berceau avant peut consister en un dispositif suiveur de mouvement.

Contrairement aux ensembles de manutention de l'art antérieur où une rotation du turboréacteur est obtenue en allongeant d'une même course les deux actionneurs positionnés le long d'un même bord du châssis de l'ensemble de manutention, on obtient grâce au dispositif de l'invention une rotation du turboréacteur autour de son axe longitudinal et non autour d'un axe sensiblement parallèle à un axe longitudinal du châssis de l'ensemble de manutention et passant par les extrémités des deux actionneurs d'un même bord.

Cela permet d'améliorer l'accessibilité au turboréacteur par rapport à l'art antérieur, en ce que la rotation du turboréacteur est opérée autour de son axe longitudinal. La rotation du turboréacteur n'est ainsi plus excentrée par rapport à son axe longitudinal, comme c'est le cas dans l'art antérieur. De plus, le dispositif d'entraînement en rotation est conçu pour entraîner en rotation le berceau respectif uniquement autour de l'axe longitudinal du turboréacteur.

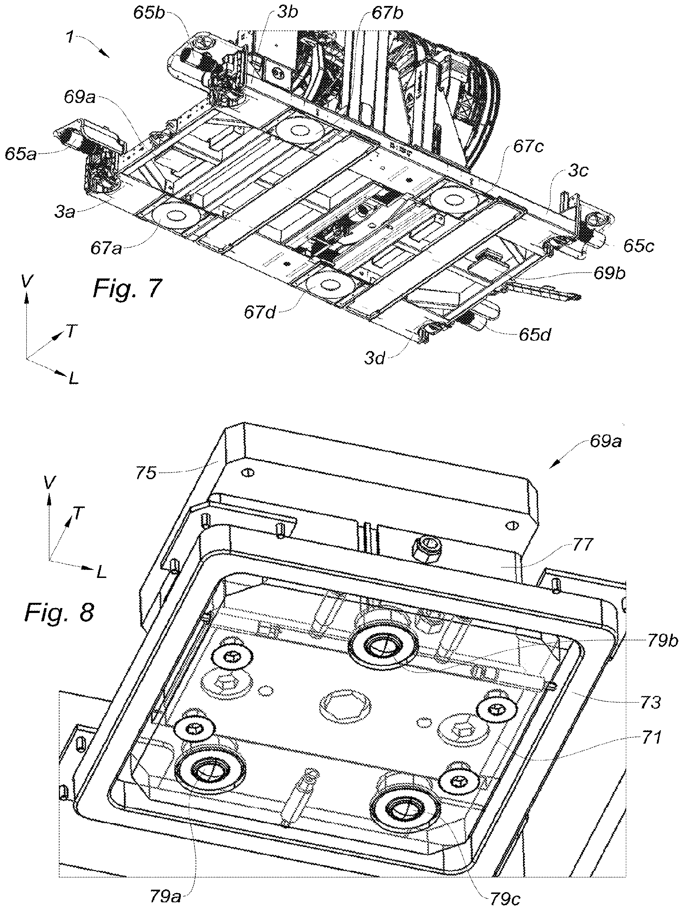

On se réfère à présent à la figure 7 représentant l'ensemble de manutention 1 en vue isométrique de dessous.

Le châssis 3 de l'ensemble 1 est équipé de dispositifs permettant son déplacement. Les dispositifs permettant le déplacement de l'ensemble de manutention doivent être escamotés ou désactivés durant les phases pendant lesquelles l'ensemble de manutention 1 doit être immobile et en appui au sol (c'est-à-dire toutes les phases durant lesquelles on ne souhaite pas déplacer le turboréacteur).

Ces dispositifs de déplacement comportent à cet effet des roues (non représentées) montées sur des essieux 65a, 65b, 65c, 65d positionnés au niveau de coins 3a, 3b, 3c, 3d du châssis 3.

Les roues permettent un déplacement de l'ensemble de manutention sur des moyennes distances (entre les ateliers) ou sur des grandes distances. Dans ce deuxième cas, les roues sont de plus grand diamètre que celui des roues utilisées dans le cas de déplacements de moyenne distance.

Les dispositifs de déplacement de l'ensemble de manutention 1 comportent également des coussins d'air 67a, 67b, 67c, 67d, permettant de décoller l'ensemble de manutention du sol puis de le déplacer sur des petites distances. Cela permet par exemple de déplacer de quelques centimètres l'ensemble de manutention lorsque celui-ci se trouve sous le mât auquel le turboréacteur doit être rattaché.

Selon l'invention, deux dispositifs de stabilisation 69a, 69b du châssis 3 sur le sol équipent l'ensemble de manutention. En variante, l'ensemble de manutention peut comporter un dispositif de stabilisation unique du châssis sur le sol, ou plus de deux dispositifs de stabilisation.

On se réfère à la figure 8 sur laquelle on a représenté une réalisation du dispositif de stabilisation 69a en vue isométrique de dessous, la réalisation du dispositif de stabilisation 69b étant conforme à celle du dispositif de stabilisation 69a.

Le dispositif de stabilisation 69a comporte une béquille 71, réalisée en matériau élastomère. La béquille, de forme générale rectangulaire, est logée dans un cadre inférieur 73 du dispositif de stabilisation. Le dispositif de stabilisation comporte une plaque supérieure 75 qui s'interface avec le châssis de l'ensemble de manutention.

La béquille 71 peut être actionnée à volonté par l'intermédiaire de vérins, par exemple pneumatiques, formant un moyen d'actionnement de ladite béquille. Les vérins (non représentés) sont logés dans un carter 77 positionné entre la plaque supérieure 75 et le cadre inférieur 73 du dispositif de stabilisation 69a.

La béquille 71 est mobile, lors de l'activation des vérins, entre une position rétractée autorisant le déplacement de l'ensemble de manutention relativement au sol et une position déployée selon laquelle ladite béquille vient en butée contre le sol.

Le contact du matériau élastomère de la béquille avec le sol empêche le déplacement intempestif de l'ensemble de manutention relativement au sol. Toutefois, afin de permettre de légers déplacements de l'ensemble de manutention le long des axes L et T, le dispositif de stabilisation 69a comporte un moyen d'ajustement du châssis de l'ensemble de manutention sur le sol, conçu pour autoriser de légers déplacements en translation du châssis sur le sol.

Ce moyen d'ajustement du châssis de l'ensemble de manutention sur le sol comporte un ensemble de billes 79a, 79b, 79c agencées dans la béquille.

Comme il va de soi, la présente invention ne se limite pas aux seules formes de réalisation de cet ensemble de manutention, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention comme définie par les revendications.

## Revendications

1. Ensemble de manutention (1) d'un turboréacteur (43) d'aéronef, comprenant :
- un châssis (3) ;
- un berceau avant (15) positionné vers l'avant dudit ensemble de manutention (1) et un berceau arrière (17) positionné vers l'arrière dudit ensemble de manutention (1), conçus pour supporter le turboréacteur (43) à maintenir, chacun desdits berceaux comportant deux dispositifs de fixation (21, 23, 35, 37) du turboréacteur (43) ;
- une pluralité d'actionneurs électriques (27, 29, 41),
ledit ensemble de manutention étant **caractérisé en ce que** la pluralité d'actionneurs électriques (27, 29, 41) comporte :
- deux actionneurs électriques, disposés de part et d'autre d'un axe longitudinal du châssis (3), l'un desdits deux actionneurs étant relié au berceau avant (15) et agencé pour déplacer uniquement ledit berceau avant (15) uniquement en translation verticale, l'autre desdits deux actionneurs étant relié au berceau arrière (17) et agencé pour déplacer uniquement ledit berceau arrière (17) uniquement en translation verticale, ou
- trois actionneurs électriques, dont un premier actionneur (27) et un deuxième actionneur (29) sont disposés en regard l'un de l'autre, de part et d'autre d'un axe longitudinal (31) du châssis (3), reliés au berceau avant (15) et agencés pour déplacer ledit berceau avant (15) en translation verticale, et dont un troisième actionneur (41) est relié au berceau arrière (17) et agencé pour déplacer ledit berceau arrière (17) en translation verticale ;
ledit ensemble de manutention (1) étant en outre **caractérisé en ce qu'**il comporte un dispositif d'entraînement en rotation (55) du berceau avant (15) autour d'un axe longitudinal (57) dudit ensemble de manutention (1).

2. Ensemble de manutention (1) selon la revendication 1, **caractérisé en ce que** chacun desdists berceaux avant (15) et arrière (17) comporte :
- un bras de fixation (19, 33) du turboréacteur (43), allongé selon une direction transversale du châssis (3), sensiblement hémicirculaire, supportant les dispositifs de fixation (21, 23, 35, 37) du turboréacteur (43), et
- un bras de liaison (25, 39), conçu pour relier le bras de fixation (19, 33) à ou aux actionneur(s) électrique(s) (27, 29, 41),
et **en ce que** le dispositif d'entraînement en rotation (55) comporte :
- une roue crantée (59), s'étendant le long du bras de fixation (19) du berceau avant (15),
- un pignon (61), en prise avec ladite roue crantée (59), supporté par le bras de liaison (25), et
- un moyen d'entraînement en rotation dudit pignon.

3. Ensemble de manutention (1) selon la revendication 2, **caractérisé en ce que** le berceau arrière (17) comporte un dispositif de guidage en rotation dudit berceau arrière (17) autour de l'axe longitudinal (57) de l'ensemble de manutention (1).

4. Ensemble de manutention (1) selon l'une quelconque des revendications 1 à 3, **caractérisé en ce que** chacun desdits actionneurs électriques (27, 29, 41) est constitué par un système vis-écrou conçu pour entraîner lesdits berceaux avant (15) et arrière (17) en translation verticale.

5. Ensemble de manutention (1) selon la revendication 4 et la revendication 2, **caractérisé en ce que** le système vis-écrou comporte :
- une vis (45), montée sur le châssis (3) de l'ensemble de manutention (1),
- un écrou, en prise avec ladite vis (45) et solidaire du bras de liaison (25, 39) du berceau (15, 17),
- un moyen d'entraînement en rotation de ladite vis.

6. Ensemble de manutention (1) selon l'une quelconque des revendications 1 à 5, **caractérisé en ce que** le châssis (3) est équipé de dispositifs permettant son déplacement, tels que des roues et des coussins d'air (67a, 67b, 67c, 67d).

7. Ensemble de manutention (1) selon la revendication 6, **caractérisé en ce qu'**il comporte au moins un dispositif de stabilisation (69a, 69b) du châssis (3) de l'ensemble de manutention (1) au sol.

8. Ensemble de manutention (1) selon la revendication 7, **caractérisé en ce que** le dispositif de stabilisation (69a, 69b) comporte :
- une béquille (71) en matériau élastomère, et
- un moyen d'actionnement de ladite béquille, entre une position rétractée autorisant le déplacement de l'ensemble de manutention relativement au sol, et une position déployée selon laquelle ladite béquille vient en butée contre le sol.

9. Ensemble de manutention (1) selon la revendication 8, **caractérisé en ce que** le dispositif de stabilisation (69a, 69b) comporte en outre un moyen d'ajustement du châssis (3) de l'ensemble de manutention (1) sur le sol, conçu pour autoriser de légers déplacements en translation dudit châssis (3) sur le sol selon au moins deux directions de déplacement.

10. Ensemble de manutention (1) selon la revendication 9, **caractérisé en ce que** le moyen d'ajustement du châssis (3) de l'ensemble de manutention sur le sol comporte un ensemble de billes (79a, 79b, 79c) agencées dans la béquille (71).

11. Ensemble de manutention (1) selon l'une quelconque des revendications 1 à 10, **caractérisé en ce qu'**il comporte un dispositif de mesure de l'effort de plaquage du turboréacteur (43) au mât sur lequel ledit turboréacteur (43) est destiné à être monté.

12. Ensemble de manutention (1) selon la revendication 11, **caractérisé en ce qu'**il comporte un moyen d'affichage de l'effort de plaquage.

## Patentansprüche

1. Einheit zur Handhabung (1) eines Flugzeugturbostrahltriebwerks (43), umfassend:
- ein Gestell (3);
- einen vorderen Stützbock (15), der im vorderen Bereich der Handhabungseinheit (1) positioniert ist, und einen hinteren Stützbock (17), der im hinteren Bereich der Handhabungseinheit (1) positioniert ist, die ausgelegt sind, um das zu haltende Turbostrahltriebwerk (43) zu stützen, wobei jeder der Stützböcke zwei Befestigungsvorrichtungen (21, 23, 35, 37) des Turbostrahltriebwerks (43) aufweist;
- eine Vielzahl elektrischer Aktuatoren (27, 29, 41),
wobei die Handhabungseinheit **dadurch gekennzeichnet ist, dass** die Vielzahl elektrischer Aktuatoren (27, 29, 41) aufweist:
- zwei elektrische Aktuatoren, die beiderseits einer Längsachse des Gestells (3) angeordnet sind, wobei der eine der zwei Aktuatoren mit dem vorderen Stützbock (15) verbunden und eingerichtet ist, um nur den vorderen Stützbock (15) vertikal translatorisch zu verlagern, wobei der andere der zwei Aktuatoren mit dem hinteren Stützbock (17) verbunden und eingerichtet ist, um nur den hinteren Stützbock (17) vertikal translatorisch zu verlagern, oder
- drei elektrische Aktuatoren, von denen ein erster Aktuator (27) und ein zweiter Aktuator (29) beiderseits einer Längsachse (31) des Gestells (3) einander zugewandt angeordnet sind, mit dem vorderen Stützbock (15) verbunden und eingerichtet sind, um den vorderen Stützbock (15) vertikal translatorisch zu verlagern, und von denen ein dritter Aktuator (41) mit dem hinteren Stützbock (17) verbunden und eingerichtet ist, um den hinteren Stützbock (17) vertikal translatorisch zu verlagern;
wobei die Handhabungseinheit (1) ferner **dadurch gekennzeichnet ist, dass** sie eine Rotationsantriebsvorrichtung (55) des vorderen Stützbocks (15) um eine Längsachse (57) der Handhabungseinheit (1) aufweist.

2. Handhabungseinheit (1) nach Anspruch 1, **dadurch gekennzeichnet, dass** sowohl der vordere (15) als auch der hintere (17) Stützbock aufweist:
- einen Befestigungsarm (19, 33) des Turbostrahltriebwerks (43), der gemäß einer transversalen Richtung des Gestells (3) etwa halbkreisförmig liegt und dabei die Befestigungsvorrichtungen (21, 23, 35, 37) des Turbostrahltriebwerks (43) trägt, und
- einen Verbindungsarm (25, 39), der ausgelegt ist, um den Befestigungsarm (19, 33) mit dem oder den elektrischen Aktuator(en) (27, 29, 41) zu verbinden,
und dass die Rotationsantriebsvorrichtung (55) aufweist:
- ein Zahnrad (59), das sich entlang des Befestigungsarms (19) des vorderen Stützbocks (15) erstreckt,
- ein von dem Verbindungsarm (25) gestütztes Ritzel (61), das mit dem Zahnrad (59) in Eingriff ist, und
- ein Rotationsantriebsmittel des Ritzels.

3. Handhabungseinheit (1) nach Anspruch 2, **dadurch gekennzeichnet, dass** der hintere Stützbock (17) eine Rotationsführungsvorrichtung des hinteren Stützbocks (17) um die Längsachse (57) der Handhabungseinheit (1) aufweist.

4. Handhabungseinheit (1) nach einem der Ansprüche 1 bis 3, **dadurch gekennzeichnet, dass** jeder der elektrischen Aktuatoren (27, 29, 41) aus einem Schraube-Mutter-System besteht, das ausgelegt ist, um den vorderen (15) und hinteren (17) Stützbock vertikal translatorisch anzutreiben.

5. Handhabungseinheit (1) nach Anspruch 4 und Anspruch 2, **dadurch gekennzeichnet, dass** das Schraube-Mutter-System aufweist:
- eine Schraube (45), die auf dem Gestell (3) der Handhabungseinheit (1) angebracht ist,
- eine Mutter, die mit der Schraube (45) im Eingriff und mit dem Verbindungsarm (25, 39) des Stützbocks (15, 17) fest verbunden ist,
- ein Rotationsantriebsmittel der Schraube.

6. Handhabungseinheit (1) nach einem der Ansprüche 1 bis 5, **dadurch gekennzeichnet, dass** das Gestell (3) mit Vorrichtungen wie Räder und Luftkissen (67a, 67b, 67c, 67d) ausgestattet ist, die seine Verlagerung ermöglichen.

7. Handhabungseinheit (1) nach Anspruch 6, **dadurch gekennzeichnet, dass** sie mindestens eine Stabilisierungsvorrichtung (69a, 69b) des Gestells (3) der Handhabungseinheit (1) am Boden aufweist.

8. Handhabungseinheit (1) nach Anspruch 7, **dadurch gekennzeichnet, dass** die Stabilisierungsvorrichtung (69a, 69b) aufweist:
- eine Abstützung (71) aus Elastomermaterial, und
- ein Betätigungsmittel der Abstützung zwischen einer eingefahrenen Position, die die Verlagerung der Handhabungseinheit relativ zum Boden gestattet, und einer ausgefahrenen Position, in der die Abstützung auf dem Boden in Anschlag gelangt.

9. Handhabungseinheit (1) nach Anspruch 8, **dadurch gekennzeichnet, dass** die Stabilisierungsvorrichtung (69a, 69b) ferner ein Einstellmittel des Gestells (3) der Handhabungseinheit (1) auf dem Boden aufweist, das ausgelegt ist, um leichte translatorische Verlagerungen des Gestells (3) auf dem Boden in mindestens zwei Verlagerungsrichtungen zu gestatten.

10. Handhabungseinheit (1) nach Anspruch 9, **dadurch gekennzeichnet, dass** das Einstellmittel des Gestells (3) der Handhabungseinheit auf dem Boden eine Anordnung von Kugeln (79a, 79b, 79c) aufweist, die in der Abstützung (71) eingerichtet sind.

11. Handhabungseinheit (1) nach einem der Ansprüche 1 bis 10, **dadurch gekennzeichnet, dass** sie eine Messvorrichtung der Andruckkraft des Turbostrahltriebwerks (43) am Mast aufweist, an dem das Turbostrahltriebwerk (43) bestimmt ist, angebracht zu sein.

12. Handhabungseinheit (1) nach Anspruch 11, **dadurch gekennzeichnet, dass** sie ein Anzeigemittel der Andruckkraft aufweist.

## Claims

1. A handling unit (1) for an aircraft turbojet engine (43), comprising:
- a chassis (3);
- a front cradle (15) positioned forward of said handling unit (1) and a rear cradle (17) positioned rearward of said handling unit (1), adapted to support the turbojet engine (43) to be maintained, each of said cradles including two turbojet engine (43) fastening devices (21, 23, 35, 37);
- a plurality of electric actuators (27, 29, 41),
said handling unit being **characterized in that** the plurality of electric actuators (27, 29, 41) includes:
- two electric actuators, disposed on either side of a longitudinal axis of the chassis (3), one of said two actuators being connected to the front cradle (15) and arranged to displace only said front cradle (15) only in vertical translation, the other of said two actuators being connected to the rear cradle (17) and arranged to displace only said rear cradle (17) only in vertical translation, or
- three electric actuators, including a first actuator (27) and a second actuator (29) disposed facing one another, on either side of a longitudinal axis (31) of the chassis (3), connected to the front cradle (15) and arranged to displace said front cradle (15) in vertical translation, and including a third actuator (41) connected to the rear cradle (17) and arranged to displace said rear cradle (17) in vertical translation;
said handling unit (1) being furthermore **characterized in that** it includes a rotational driving device for driving in rotation (55) the front cradle (15) about a longitudinal axis (57) of said handling unit (1).

2. The handling unit (1) according to claim 1, **characterized in that** each of said front (15) and rear (17) cradles includes:
- a turbojet engine (43) fastening arm (19, 33), elongated in a transverse direction of the chassis (3), substantially semicircular, supporting the turbojet engine (43) fastening devices (21, 23, 35, 37), and
- a connecting arm (25, 39) adapted to connect the fastening arm (19, 33) to the electric actuator(s) (27, 29, 41),
and **in that** the rotational driving device (55) includes:
- a notched wheel (59), extending along the fastening arm (19) of the front cradle (15),
- a pinion (61), engaged with said notched wheel (59), supported by the connecting arm (25), and
- a means for driving in rotation said pinion.

3. The handling unit (1) according to claim 2, **characterized in that** the rear cradle (17) includes a guiding device for guiding in rotation said rear cradle (17) about the longitudinal axis (57) of the handling unit (1).

4. The handling unit (1) according to any one of claims 1 to 3, **characterized in that** each of said electric actuators (27, 29, 41) is constituted by a screw-nut system adapted to drive said front (15) and rear (17) cradles in vertical translation.

5. The handling unit (1) according to claim 4 and claim 2, **characterized in that** the screw-nut system includes:
- a screw (45) mounted on the chassis (3) of the handling unit (1),
- a nut, engaged with said screw (45) and secured to the connecting arm (25, 39) of the cradle (15, 17),
- a means for driving in rotation said screw.

6. The handling unit (1) according to any one of claims 1 to 5, **characterized in that** the chassis (3) is equipped with devices allowing its displacement, such as wheels and air cushions (67a, 67b, 67c, 67d).

7. The handling unit (1) according to claim 6, **characterized in that** it includes at least one stabilization device for stabilizing (69a, 69b) the chassis (3) of the handling unit (1) to the ground.

8. The handling unit (1) according to claim 7, **characterized in that** the stabilization device (69a, 69b) includes:
- a stand (71) made of elastomer material, and
- a means for actuating said stand, between a retracted position authorizing displacement of the handling unit relative to the ground, and a deployed position in which said stand abuts against the ground.

9. The handling unit (1) according to claim 8, **characterized in that** the stabilization device (69a, 69b) further includes a means for adjusting the chassis (3) of the handling unit (1) on the ground, adapted to authorize slight displacements in translation of said chassis (3) on the ground in at least two directions of displacement.

10. The handling unit (1) according to claim 9, **characterized in that** the means for adjusting the chassis (3) of the handling unit on the ground includes a set of balls (79a, 79b, 79c) arranged in the stand (71).

11. The handling unit (1) according to any one of claims 1 to 10, **characterized in that** it includes a device for measuring the force of pressing the turbojet engine (43) to the mast on which said turbojet engine (43) is intended to be mounted.

12. The handling unit (1) according to claim 11, **characterized in that** it includes a means for displaying the pressing force.
